# DEMANDE DE BREVET EUROPEEN

(11) **EP 0 600 766 A1**
(43) Date de publication de la demande: **08.06.1994**
(21) Numéro de dépôt: 93402849.9
(22) Date de dépôt: 23.11.1993
(51) Int. Cl.: B32B 17/10, C03C 27/12

(54) **Vitrage automobile anti-effraction**

(30) Priorité: 30.11.1992 DE 4240468
(71) Demandeur: SAINT-GOBAIN VITRAGE INTERNATIONAL, F-92400 Courbevoie (FR); VEGLA Vereinigte Glaswerke GmbH, D-52066 Aachen (DE)
(72) Inventeur: Hörner, Alfred, D-7252 Weil Der Stadt 2 (DE)
(74) Mandataire: Le Vaguerèse, Sylvain Jacques

(57) **Abrégé**

Un vitrage automobile anti-effraction en verre feuilleté, utilisé comme vitrage latéral ou comme vitrage de portière, est constitué d'au moins trois feuilles de verre silicaté (2, 4, 6) présentant une épaisseur de verre totale comprise entre 4,5 et 7,5 mm et d'au moins deux feuilles intercalaires adhésives (3, 5) en matière thermoplastique d'une épaisseur de matière thermoplastique totale d'au moins 1,5 mm.

Ce vitrage en verre feuilleté possède des propriétés anti-effraction et présente une flexibilité adéquate lors de l'essai au mannequin.

## Description

La présente invention concerne un vitrage automobile anti-effraction constitué d'un verre feuilleté et utilisable, en particulier, comme vitrage latéral et vitrage de portière de véhicule.

Les vitrages latéraux et de portières de véhicules automobiles de même que les lunettes arrière sont, en règle générale, en verre qualifié de verre de sécurité trempé. Le verre de sécurité trempé est un verre monolithique qui a été trempé par voie thermique et qui, en cas de destruction, se divise en un grand nombre de petits fragments et libère la baie de fenêtre. Suite au nombre croissant de vols de voitures et d'effractions dans les voitures, des vitrages automobiles possédant des propriétés anti-effraction soulèvent un intérêt considérable.

Parmi les vitrages anti-effraction, il convient en tout premier lieu de mentionner les vitrages en verre feuilleté. Les vitrages en verre feuilleté doivent satisfaire à une série de conditions pour obtenir l'homologation autorisant leur montage dans des voitures. Ces conditions indispensables figurent dans la norme ECE R 43 connue. Conformément à cette norme, les vitrages en verre feuilleté doivent céder lors de l'essai dit au mannequin et doivent se briser en formant de nombreuses fissures circulaires à peu près centrées sur le point d'impact de la tête du mannequin ; cependant, la tête du mannequin ne doit pas traverser le vitrage et de plus grands fragments de verre ne doivent pas se détacher de la feuille intercalaire. Cela signifie que même les vitrages anti-effraction doivent se briser et céder lors du test normalisé au mannequin. Par ailleurs, selon une condition essentielle pour un vitrage résistant aux effractions, il faut que, lors d'un essai d'effraction, le vitrage résiste le plus longtemps possible et ne libère pas la baie de fenêtre. Ces conditions contradictoires imposent des limites relativement étroites à la structure de tels vitrages en verre feuilleté.

Aux vitrages automobiles anti-effraction connus appartiennent, en tout premier lieu, les vitrages en verre feuilleté dans lesquels un des éléments du verre feuilleté est une feuille de polycarbonate résistant aux chocs. Un tel vitrage automobile tel que décrit, par exemple, dans le document DE-A1-39 19 290, est constitué d'une feuille de verre de 3 mm d'épaisseur trempée par voie thermique, d'une feuille de polycarbonate de 2 mm d'épaisseur et d'une feuille de verre de 1,2 mm d'épaisseur trempée par voie chimique, ces couches étant unies les unes aux autres chaque fois à l'aide d'un intercalaire adhésif en polyuréthane de 1,2 mm d'épaisseur.

Un autre vitrage automobile anti-effraction connu en verre feuilleté est constitué d'une feuille de verre de 3 à 4 mm d'épaisseur trempée par voie thermique et d'une feuille de verre de 1,5 à 2,5 mm d'épaisseur, non trempée ou faiblement trempée, qui sont unies l'une à l'autre par l'intermédiaire d'une couche thermoplastique, par exemple en polyuréthane, de 0,8 à 2,0 mm d'épaisseur (document EP-A1-0 418 123). Dans ce vitrage en verre feuilleté anti-effraction connu, qui est prévu, en particulier, comme vitrage de portière réglable en hauteur, la feuille de verre trempée par voie thermique qui forme la feuille de verre du vitrage tournée vers l'extérieur, présente de plus grandes dimensions que les autres couches et son domaine marginal qui dépasse des autres couches sert au maintien et au guidage du vitrage en verre feuilleté dans les glissières de guidage du cadre de fenêtre.

Les deux systèmes connus ont chacun leurs inconvénients spécifiques. Le traitement des plaques de polycarbonate, par exemple, exige des mesures spécifiques qui rendent le procédé de fabrication onéreux. Des vitrages en verre feuilleté formés simplement de deux feuilles de verre et d'un intercalaire adhésif relativement épais sont certes plus simples au plan de la fabrication, mais la résistance aux effractions qui peut ainsi être obtenue est insuffisante parce que la feuille intercalaire en polyuréthane, après destruction de la feuille de verre extérieure, peut être découpée par un outil coupant enfoncé entre les fragments de verre. De plus, un vitrage en verre feuilleté dans lequel seul le bord dépassant d'une feuille de verre trempée par voie thermique est retenu dans le cadre de fenêtre, peut être facilement enfoncé dans sa totalité, lorsque l'on détruit la feuille de verre trempée. Dans le cas du vitrage en verre feuilleté connu dans lequel la feuille de verre trempée forme la feuille de verre extérieure, cette possibilité est particulièrement marquée.

L'invention a pour but de procurer un vitrage automobile anti-effraction qui, d'une part, satisfasse aux conditions de la norme ECE R 43 et, d'autre part, possède une efficacité accrue en matière de résistance aux effractions tout en pouvant être fabriqué par le procédé traditionnel de fabrication du verre feuilleté.

Le vitrage en verre feuilleté anti-effraction conforme à l'invention se distingue par le fait qu'il est constitué d'au moins trois feuilles de verre silicaté donnant une épaisseur de verre totale comprise entre 4,5 et 7,5 mm et, de préférence, entre 5 et 7,5 mm ainsi que d'au moins deux feuilles intercalaires adhésives en matière thermoplastique d'une épaisseur de matière thermoplastique totale d'au moins 1,5 mm.

L'efficacité particulièrement avantageuse, dans le domaine de la résistance souhaitée aux effractions, des vitrages en verre feuilleté conformes à l'invention est basée notamment sur le fait qu'ils comportent une feuille de verre silicaté intermédiaire qui rend impossible ou du moins extrêmement difficile l'enfoncement d'un outil coupant jusqu'à la feuille de verre silicaté interne extrême. Par ailleurs, l'agencement des divers éléments du verre feuilleté et le respect de limites inférieures et supérieures déterminées pour les épaisseurs des feuilles de verre et des feuilles intercalaires thermoplastiques assurent que le vitrage en verre feuilleté dans sa globalité présente une rigidité réduite. Ceci permet de satisfaire l'exigence selon laquelle le vitrage doit céder et se fragmenter lors de l'essai au mannequin.

Une importance particulière est, dans ce cas, accordée à l'épaisseur globale du verre, c'est-à-dire à la somme des épaisseurs des feuilles de verre silicaté individuelles qui ne peut pas dépasser 7,5 mm au total. Lorsque cette limite est dépassée, la rigidité du vitrage en verre feuilleté atteint une valeur à laquelle la flexibilité exigée est remise en question. De manière analogue, les épaisseurs des feuilles intercalaires thermoplastiques revêtent une importance particulière et ce, en liaison avec les épaisseurs des feuilles de verre silicaté. Ainsi, il s'est avéré que, dans le cas où le vitrage en verre feuilleté ne se compose que de feuilles de verre silicaté relativement minces d'environ 1,5 mm d'épaisseur, la flexibilité nécessaire peut être obtenue à condition que les feuilles intercalaires individuelles soient relativement minces, notamment par exemple d'environ 0,4 à 0,8 mm d'épaisseur seulement. Cependant, lorsque l'on utilise une feuille de verre silicaté plus épaisse, l'obtention de la flexibilité nécessaire impose que la feuille intercalaire voisine de cette feuille de verre silicaté soit nettement plus épaisse. Lorsque, par exemple, une des feuilles de verre silicaté présente une épaisseur d'environ 3 mm, il faut qu'une feuille intercalaire adjacente à cette feuille de verre silicaté ait une épaisseur d'au moins environ 2 mm pour que la flexibilité nécessaire soit atteinte.

Si l'épaisseur d'une feuille intercalaire thermoplastique est, selon l'invention, d'autant plus grande qu'une des feuilles de verre adjacentes est plus épaisse, il est préférable également que le rapport entre l'épaisseur d'une feuille intercalaire et l'épaisseur de la feuille de verre la plus épaisse à son contact augmente avec l'épaisseur de ladite feuille de verre.

Ainsi, ce rapport entre les épaisseurs est, par exemple, de l'ordre de 0,25 pour une feuille de verre de 1,5 mm et de l'ordre de 0,7 pour une feuille de verre de 3 mm d'épaisseur. Cette évolution du rapport entre les épaisseurs permet, notamment, de conserver une flexibilité au vitrage.

Selon un des modes de réalisation de l'invention, le vitrage automobile anti-effraction comprend quatre feuilles de verre silicaté de 1,5 mm d'épaisseur chacune et trois feuilles intercalaires thermoplastiques, notamment en polyuréthane, de 0,38 ou 0,76 mm d'épaisseur chacune, ces dernières épaisseurs étant des épaisseurs traditionnellement utilisées dans le commerce pour des feuilles de polyuréthane.

Par ailleurs, selon un mode de réalisation particulièrement avantageux de l'invention, une partie de la structure feuilletée constituant le vitrage automobile anti-effraction, prévu dans ce cas en particulier comme vitrage de portière réglable en hauteur, présente de plus grandes dimensions que le reste de la structure, cette partie étant également un verre feuilleté et son domaine marginal dépassant du reste de la structure sert au maintien et au guidage du vitrage dans les glissières de guidage du cadre de fenêtre. Le verre dépassant du reste de la structure étant un verre feuilleté, il est moins facilement enfonçable dans sa totalité lors d'une tentative d'effraction. Le reste de la structure peut se trouver du côté du vitrage tourné vers l'intérieur du véhicule ou du côté du vitrage tourné vers l'extérieur du véhicule.

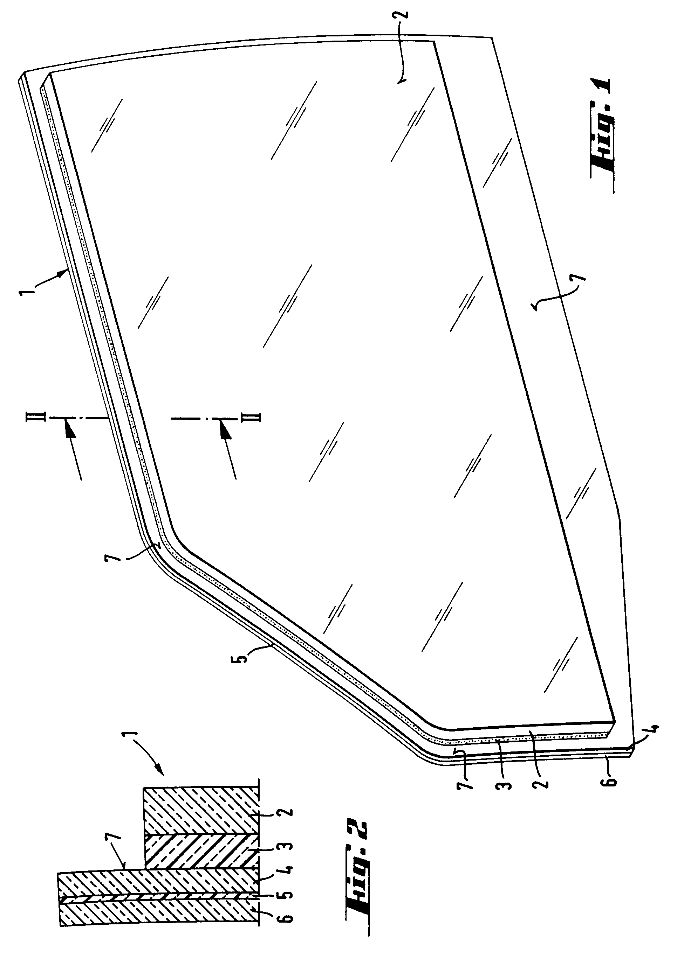

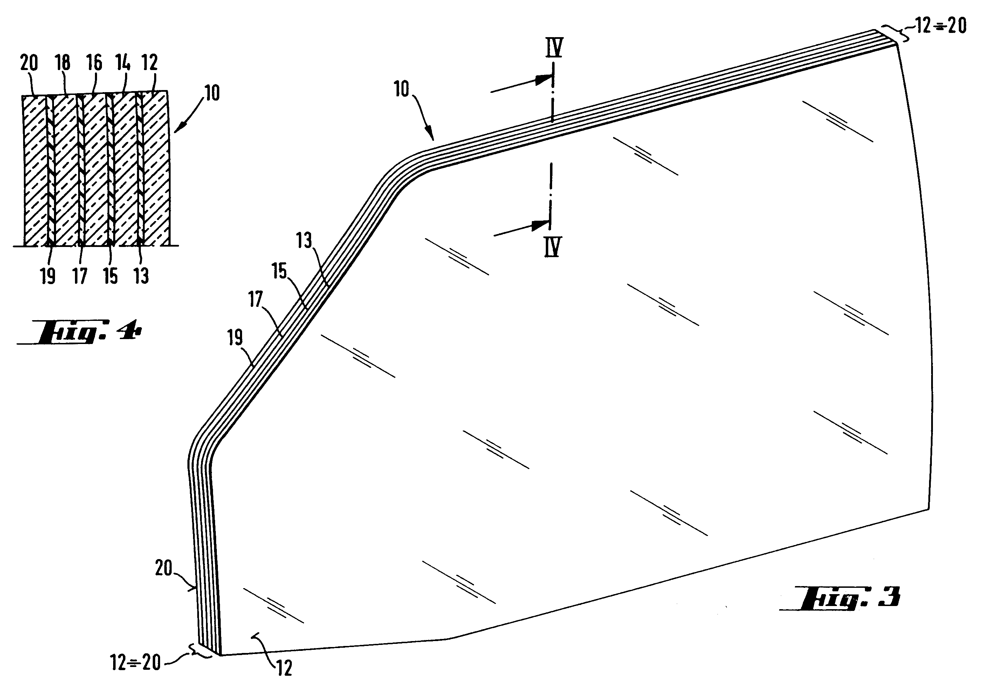

D'autres développements et perfectionnements avantageux de l'invention ressortiront des revendications annexées et de la description suivante de divers exemples de réalisation de l'invention, en référence aux dessins annexés dans lesquels :
■ la figure 1 est une vue en perspective d'un vitrage de portière descendant à bords décalés,
■ la figure 2 est une vue en coupe, à plus grande échelle, du vitrage en verre feuilleté représenté à la figure 1,
■ la figure 3 est une vue également en perspective d'un vitrage de portière dans une exécution conforme à l'invention, avec des bords affleurants, et
■ la figure 4 est une vue en coupe, également à plus grande échelle, du vitrage en verre feuilleté représenté à la figure 2.

La figure 1 représente un vitrage de portière 1 en verre feuilleté, bombé de façon essentiellement cylindrique, présentant la structure illustrée à la figure 2. Le vitrage en verre feuilleté 1 est constitué de trois feuilles de verre silicaté et de deux feuilles intercalaires adhésives unissant les feuilles de verre silicaté l'une à l'autre. Le côté extérieur convexe du vitrage en verre feuilleté est formé par une feuille de verre flotté 2 de 3 mm d'épaisseur. Cette feuille de verre flotté extérieure 2 peut être une feuille de verre refroidie normalement, c'est-à-dire dont les contraintes ont été éliminées, ou une feuille de verre flotté qui a été trempée ou trempée partiellement par voie thermique. Cette feuille de verre 2 est suivie d'une feuille intercalaire 3 en polyuréthane thermoplastique d'environ 2,2 mm d'épaisseur. Etant donné qu'une épaisseur habituellement utilisée dans le commerce des feuilles de polyuréthane thermoplastique s'élève à 0,76 mm, trois pellicules de 0,76 mm d'épaisseur chacune sont juxtaposées l'une à l'autre lors de la fabrication du vitrage en verre feuilleté et se fondent l'une dans l'autre lors du processus d'assemblage pour donner la feuille intercalaire 3. Cette feuille intercalaire 3 est suivie d'une feuille de verre flotté 4 de 1,5 mm d'épaisseur, d'une feuille 5 de polyuréthane thermoplastique de 0,38 mm d'épaisseur et d'une autre feuille de verre flotté 6 de 1,5 mm d'épaisseur. La feuille de verre flotté 6 forme la surface concave du vitrage en verre feuilleté qui est tournée vers l'intérieur de l'habitacle du véhicule.

Les feuilles de verre flotté 4 et 6 peuvent être des feuilles de verre qui ont subi un refroidissement normal et sont exemptes de contraintes, ou des feuilles de verre trempées, en particulier par voie chimique. L'ensemble constitué par les feuilles de verre 4 et 6 et la feuille intercalaire 5 déborde de tous les côtés au-delà de la feuille de verre extérieure 2 et de la feuille intercalaire adhésive 3. On obtient ainsi une sorte de marche à la périphérie du vitrage. Ce domaine marginal dépassant 7 a l'épaisseur d'un vitrage monolithique traditionnel et sert à monter le vitrage coulissant de la portière dans les glissières correspondantes du cadre de fenêtre.

Les figures 3 et 4 illustrent un vitrage en verre feuilleté 10 conforme à l'invention dans lequel cinq feuilles de verre flotté de même épaisseur 12, 14, 16, 18 et 20, chacune de 1,5 mm d'épaisseur, sont réunies l'une à l'autre par l'intermédiaire de quatre feuilles adhésives thermoplastiques de même épaisseur 13, 15, 17 et 19. Les feuilles de verre flotté 12, 14, 16, 18 et 20 peuvent être des feuilles de verre qui ont subi un refroidissement normal, c'est-à-dire des feuilles de verre sans contraintes, mais certaines de ces feuilles de verre ou la totalité d'entre elles peuvent présenter une trempe plus ou moins poussée. Il est avantageux que, par exemple, au moins la feuille de verre extérieure 12 ou les deux feuilles de verre extérieures 12 et 20 soient trempées par voie chimique et que leurs couches superficielles extérieures présentent des contraintes de compression de 300 à 500 N/mm², de préférence de 300 à 400 N/mm². Pour les feuilles intercalaires thermoplastiques 13, 15, 17 et 19, des feuilles de 0,38 mm d'épaisseur de polyuréthane thermoplastique sont utilisées, mais des feuilles habituellement utilisées dans le commerce de polyvinylbutyral d'épaisseur correspondante peuvent également être utilisées à cet effet.

## Revendications

1. Vitrage automobile anti-effraction en verre feuilleté, prévu en particulier pour les vitrages latéraux et les vitrages de portières, caractérisé en ce qu'il comprend au moins trois feuilles de verre silicaté présentant une épaisseur de verre totale comprise entre 4,5 et 7,5 mm et, de préférence, entre 5 et 7,5 mm, et au moins deux feuilles intercalaires adhésives en matière thermoplastique d'une épaisseur de matière thermoplastique totale d'au moins 1,5 mm.

2. Vitrage automobile anti-effraction selon la revendication 1, caractérisé en ce que l'épaisseur d'une feuille intercalaire thermoplastique est d'autant plus grande qu'une des feuilles de verre adjacente est plus épaisse.

3. Vitrage automobile anti-effraction selon la revendication 2, caractérisé en ce que le rapport entre l'épaisseur d'une feuille intercalaire et l'épaisseur de la feuille de verre la plus épaisse à son contact augmente avec l'épaisseur de ladite feuille de verre.

4. Vitrage automobile anti-effraction selon l'une des revendications précédentes, caractérisé en ce qu'une partie, également feuilleté, du verre feuilleté déborde du reste du verre feuilleté et en ce que son domaine marginal dépassant le reste du verre feuilleté sert au maintien et au guidage du vitrage dans des glissières de guidage d'un cadre de fenêtre, notamment de portière.

5. Vitrage automobile anti-effraction selon l'une des revendications précédentes, caractérisé en ce qu'il comprend quatre feuilles de verre silicaté de 1,5 mm d'épaisseur chacune et trois feuilles intercalaires thermoplastiques de 0,38 ou de 0,76 mm d'épaisseur chacune.

6. Vitrage automobile anti-effraction selon l'une des revendications 1 à 4, caractérisé en ce qu'il comprend cinq feuilles de verre silicaté (12, 14, 16, 18, 20) d'environ 1,5 mm d'épaisseur chacune et quatre feuilles intercalaires thermoplastiques (13, 15, 17, 19) de 0,38 mm d'épaisseur chacune.

7. Vitrage automobile anti-effraction selon l'une des revendications 1 à 4, caractérisé en ce que les feuilles de verre silicaté comprennent une feuille de verre extérieure (2) d'environ 3 mm d'épaisseur et deux feuilles de verre (4, 6) chacune de 1,5 mm d'épaisseur et en ce que la feuille intercalaire thermoplastique (3) adjacente à la feuille de verre (2) de 3 mm d'épaisseur a une épaisseur d'environ 2,2 mm, tandis que la feuille intercalaire thermoplastique (5) disposée entre les deux feuilles de verre (4, 6) de 1,5 mm d'épaisseur a une épaisseur de 0,38 mm.

8. Vitrage automobile anti-effraction selon l'une des revendications précédentes, caractérisé en ce qu'une ou plusieurs des feuilles de verre silicaté sont trempées par voie thermique ou par voie chimique.

9. Vitrage automobile anti-effraction selon l'une des revendications précédentes, caractérisé en ce que les feuilles intercalaires sont faites d'un polyuréthane thermoplastique.
